# EUROPÄISCHE PATENTANMELDUNG

(11) **EP 1 902 771 A2**
(43) Veröffentlichungstag der Anmeldung: **26.03.2008**
(21) Anmeldenummer: 07014156.9
(22) Anmeldetag: 19.07.2007
(51) Int. Cl.: B01D 61/06

(54) **Vorrichtung zur Wasseraufbereitung nach dem Prinzip der umgekehrten Osmose**

(30) Priorität: 21.09.2006 DE 102006044497
(71) Anmelder: Völker, Manfred, 63825 Blankenbach (DE)
(72) Erfinder: Völker, Manfred, 63825 Blankenbach (DE)
(74) Vertreter: Flosdorff, Jürgen

(57) **Zusammenfassung**

Die Vorrichtung zur Wasseraufbereitung nach dem Prinzip der umgekehrten Osmose, insbesondere für die Versorgung von Hämodialysegeräten, ist mit einer zwischen Konzentratauslaß (15) und Rohwassereinlass (14) des Umkehrosmosefilters (11) angeschlossenen Zirkulationspumpe (30) ausgestattet, deren Funktion hauptsächlich darin besteht, eine optimale Überströmung der primärseitigen Oberfläche der Filtermembran (12) zu gewährleisten. Die Funktion der das Rohwasser zuführenden Pumpe (10) beschränkt sich dann im wesentlichen darauf, in Verbindung mit dem in die abführende Konzentratleitung eingefügten Strömungswiderstand (Druckhalteventil oder Drossel 20) den für die Filtration erforderlichen Druck aufzubauen, bei einer wesentlich geringeren Förderleistung, die sich aus der Permeatentnahme und dem in den Abfluss abgeführten Konzentratfluss ergibt. Im Vergleich zu einer Standard-Umkehrosmoseanlage, bei der beide Funktionen von der zuführenden Pumpe (10) erbracht werden, führt dies u.a. zu einer erheblichen Reduzierung des Gesamt-Energiebedarfs für den Betrieb der Pumpen.

## Beschreibung

Die Erfindung betrifft eine Vorrichtung zur Wasseraufbereitung nach dem Prinzip der umgekehrten Osmose. Vorrichtungen dieser Art, Umkehrosmose- oder RO-Anlagen, werden insbesondere in Verbindung mit Hämodialysegeräten eingesetzt, um aus Leitungswasser ausreichend reines, keimfreies Wasser zur Bereitung der Dialysierflüssigkeit zu gewinnen.

Der Erfindung zielt insbesondere darauf ab, einen möglichst energiesparenden Betrieb der Umkehrosmoseanlage zu erreichen.

Diese Aufgabe wird durch die im kennzeichnenden Teil des Hauptanspruches genannten Merkmale gelöst. Weitere Merkmale und Ausgestaltungen der Erfindung ergeben sich aus den Unteransprüchen und der nachfolgenden Beschreibung von Ausführungsbeispielen in Verbindung mit den Abbildungen. Dabei zeigt
Fig. 1 - das Schema einer typischen Umkehrosmoseanlage nach dem Stand der Technik,
Fig. 2 - das Schema einer vergleichbaren Umkehrosmoseanlage mit Ausstattungsmerkmalen entsprechend der Erfindung.

Das Funktionsprinzip von Umkehrosmoseanlagen besteht bekanntlich darin, daß das aufzubereitende Wasser in einem Filtermodul unter hohem Druck an der Oberfläche einer semipermeablen Membran entlanggeführt wird, wobei ein Teil des Wassers, das sogenannte Permeat, durch die Membran tritt und auf der anderen Seite der Membran gesammelt und den Verbrauchsstellen zugeführt wird. Der nicht durch die Membran tretende, mit zurückgehaltenen Stoffen angereicherte Teil des Rohwassers, das sogenannte Konzentrat, fließt am Ende der Strömungsstrekke des Primärraumes aus dem Membranmodul aus.

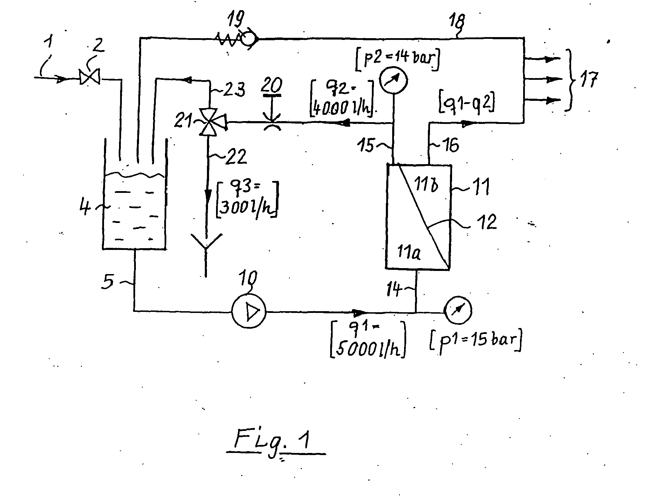

Das in Fig. 1 gezeigte Schema veranschaulicht als typisches Beispiel das Zusammenwirken wesentlicher Funktionselemente einer Umkehrosmoseanlage nach dem Stand der Technik. Das aufzubereitende Rohwasser fließt aus der zuführenden Leitung 1 über das Ventil 2 in ein Puffergefäß 4 mit eingebauter Füllstandsregelung. Aus diesem Behälter 4 gelangt das Wasser durch die Leitung 5 über die Pumpe 10 in das UmkehrosmoseFilter 11, dessen Primärraum 11a durch die semipermeable Membran 12 von dem Sekundärraum 11b getrennt ist. Aus dem Sekundärraum 11b fließt das Permeat in eine Ringleitung 16/18, von der Verbraucherleitungen 17 abzweigen. Öberschüssig erzeugtes Permeat kann am Ende der Ringleitung über ein eingefügtes Druckhalteventil 19 in das Gefäß 4 zurückfließen, wobei die Einstellung dieses Ventils den in der Ringleitung 16/18 herrschenden Druck bestimmt.

Der für die Filtration notwendige Druck im Primärraum des RO-Filters 11 wird durch die Pumpe 10 in Verbindung mit einem in die Konzentratleitung 15 stromabwärts vom Filter eingefügten Strömungswiderstand 20, z.B. in Form eines Drossel oder eines Druckhalteventils, erzeugt.

Für die Funktion des RO-Filters ist darüber hinaus die Überströmung der Primärseite der Filtermembran von erheblicher Bedeutung. Je geringer die Membran-Überstömung im Verhältnis zur Permeat-Entnahme ist, desto höher wird die Konzentrationsdifferenz zurückgehaltener Stoffe zwischen Auslass und Einlass des Primärraumes 11a. Bei unzureichender Überströmung besteht ein erhöhtes Risiko, dass die Konzentration schwerlöslicher Anteile eine kritische Grenze überschreitet. Durch Bildung von Ablagerungen nimmt dann die Durchlässigkeit der Membran und damit der Permeatfluß ab, was einem vorzeitigen Unbrauchbarwerden des Umkehrosmosefilters entspricht. Aufgrund dieses Sachverhalts müssen unter Berücksichtigung der Rohwasserqualität die Betriebsbedingungen normalerweise so eingestellt werden, dass der über die Leitung 15 austretende Konzentratfluss ein Mehrfaches des über die Leitung 16 entnommenen Permeatflusses beträgt. Um trotzdem eine akzeptable Ausbeute (= Verhältnis Permeatfluss / Rohwasserzufluss) zu erzielen, ist es nach dem Stand der Technik üblich, einen Teil des vom Primärraum des Umkehrosmosefilters abfließenden Konzentrats auf die Rohwasserseite zurückzuführen. Bei der in Fig. 1 gezeigten typischen Anordnung geschieht dies dadurch, dass das Konzentrat zu einem 3-Wege-Ventil 21 gelangt, das einen Teil des Konzentrats über die Leitung 23 in das Puffergefäß 4 zurückleitet und den Rest über die Leitung 22 dem Abfluss zuführt.

In das Schema Fig. 1 sind einige typische Betriebsdaten einer Standard-Umkehrosmoseanlage eingetragen:
- Druck am Rohwassereingang des RO-Filters P1 = 15 bar
- Zufluss am Rohwassereingang des RO-Filters q1 = 5000 l/h
- Druck am Konzentratausgang des RO-Filters P2 = 14 bar
- Abfluss am Konzentratausgang des RO-Filters q2 = 4000 l/h
- Abscheidefluss Konzentrat q3 = 300 l/h
- Permeatfluss q1 q2 = 1000 l/h

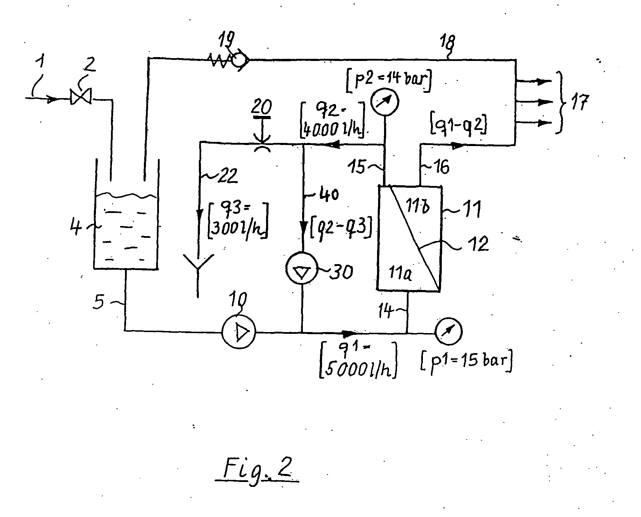

Bei dem Schema einer Umkehrosmoseanlage entsprechend der Erfindung in Fig. 2 ist zwischen dem Konzentratausgang 15 und dem Rohwassereingang 14 des RO-Filters, d.h. zwischen Einlass und Auslass des Primärraumes, zusätzlich eine Zirkulationspumpe 30 angeschlossen. Eine wesentliche Funktion dieser zusätzlichen Pumpe besteht darin, die Durchströmung des Primärraumes im Sinne einer optimalen Überströmumg der Primärseite der Filtermembran zu gewährleisten, und zwar weitgehend unabhängig von der Tätigkeit der für die Rohwasser-Zuführung und den Druckaufbau eingesetzten Pumpe 10. Es ergibt sich eine größere Freizügigkeit hinsichtlich einer Optimierung der Betriebsbedingungen des Filtermoduls.

Ein für viele Anwendungen noch wichtigerer Vorteil liegt darin, dass mit der in Fig. 2 gezeigten Anordnung eine erhebliche Energieersparnis erreicht wird. Als Grundlage für einen diesbezüglichen Vergleich sind in Fig. 2 Betriebsdaten eingetragen, die den gleichen Betriebszustand wie bei der Standard-Umkehrosmoseanlage nach Fig. 1 repräsentieren. Für die beiden Pumpen gelten dann folgende Daten:
a) Zirkulationspumpe 30:

| | |
|---|---|
| Förderdruck: | p2 - p1 = 1 bar |
| Durchfluss: | q2 - q3 = 3700 l/h |

Die aus Förderdruck und Durchfluss zu berechnende hydraulische Förderleistung beträgt ca. 0,103 kW.
b) Rohwasser-Förderpumpe 10:

| | |
|---|---|
| Förderdruck: | p1 = 15 bar |
| Durchfluss: | q1- q2 + q3 = 1300 l/h |

Dies entspricht einer hydraulischen Förderleistung von ca. 0,542 kW.

Im Vergleich dazu ergibt sich für die Pumpe 10 in der Standard-Anordnung nach Fig. 1:

| | |
|---|---|
| Förderdruck: | p1 = 15 bar |
| Durchfluss: | q1 = 5000 l/h, |

woraus eine hydraulische Förderleistung von ca. 2,085 kW resultiert. Dies ist etwa das 3,23-fache der Summe der hydraulischen Förderleistungen der beiden Pumpen in der Anordnung nach Fig. 2. Der Einsatz einer separaten Zirkulationspumpe entsprechend der Erfindung ermöglicht nach diesem Beispiel eine Absenkung des Energiebedarfs für den Antrieb der Pumpen auf circa 31 %.

Ein weiterer Vorteil liegt darin, dass eine Rückführung von Konzentrat in das Puffergefäß 4 nicht notwendig ist. Die Funktionselemente, die für die Aufteilung des Konzentratflusses in einen rückgeführten und einen dem Abfluss zugeleiteten Anteil erforderlich sind (Ventil 21 in Fig. 1 mit zugehöriger Steuerungseinrichtung), können entfallen.

Der mechanische Antrieb der beiden Pumpen in der Anordnung nach Fig. 2 kann durch separate Elektromotoren erfolgen. In weiterer Ausgestaltung bestehen jedoch auch Möglichkeiten, die beiden Pumpen in einem Aggregat zu vereinigen und mit einem gemeinsamen Motorantrieb auszustatten.

Eine weitere Möglichkeit zur Energieeinsparung besteht darin, den Strömungswiderstand 20, der normalerweise von einem Druckhalteventil oder Drossel gebildet wird, ganz oder teilweise in Form einer Turbine zu realisieren, die zum Antrieb der Zirkulationspumpe 30 benutzt wird.

Die Erfindung sieht somit eine Vorrichtung zur Wasseraufbereitung nach dem Prinzip der Umgekehrten Osmose mit einem Umkehrosmosefilter 11, das durch die RO-Membran 12 in einen Primärraum 11a und einen Sekundärraum 11b unterteilt ist, einer in die Zuführleitung 1 eingefügten Pumpe 10, die dem Einlass 14 des Primärraumes aufzubereitendes Wasser zuführt, einem in die Abflussleitung 15 eingefügten, für den Druckaufbau im Primärraum maßgebenden Strömungswiderstand 20, einer die Abflussleitung 1 stromaufwärts des Strömungswiderstandes mit der Zuführleitung 1 stromabwärts der Pumpe verbindenden Rezirkulationsleitung 40 und mit einer zwischen Auslass 15 und Einlass 14 des Primärraumes angeschlossenen Zirkulationspumpe 30 vor, wobei die Zirkulationspumpe 30 in die Rezirkulationsleitung 40 eingefügt ist.

## Patentansprüche

1. Vorrichtung zur Wasseraufbereitung nach dem Prinzip der umgekehrten Osmose mit einem Umkehrosmosefilter (11), das durch die RO-Membran (12) in einen Primärraum (11a) und einen Sekundärraum (11b) unterteilt ist, einer Pumpe (10), die dem Einlass (14) des Primärraumes aufzubereitendes Wasser zuführt, und einem in die Abflussleitung (15) eingefügten, für den Druckaufbau im Primärraum maßgebenden Strömungswiderstand (20)
**gekennzeichnet durch** eine zwischen Auslass (15) und Einlass (14) des Primärraumes angeschlossene Zirkulationspumpe (30) zur Unterstützung der Durchströmung des Primärraumes.

2. Vorrichtung nach Anspruch 1, **dadurch gekennzeichnet, daß** die zuführende Pumpe (10) und die Zirkulationspumpe (30) mechanisch gekoppelt sind und einen gemeinsamen Antrieb aufweisen.

3. Vorrichtung nach Anspruch 1, **gekennzeichnet durch** eine in die Konzentrat-Abflussleitung eingefügte Turbine, die zum. Antrieb der Zirkulationspumpe (30) herangezogen wird.
